# EUROPEAN PATENT APPLICATION

(11) **EP 2 808 158 A1**
(43) Date of publication of application: **03.12.2014**
(21) Application number: 13170098.1
(22) Date of filing: 31.05.2013
(51) Int. Cl.: B29C 70/38

(54) **A method and apparatus for laying a fibre material on a mould surface**

(71) Applicant: Siemens Aktiengesellschaft, 80333 München (DE)
(72) Inventor: Madsen, Kristian Lehmann, 7000 Fredericia (DK); Madsen, Steen, 5500 Middelfart (DK)

(57) **Abstract**

A method for laying a fibre material on a mould (1) surface, in which rovings (9, 13) of the fibre material are laid on the mould (1) surface or on a fibre material already laid on the mould (1) surface, whereby the rovings (9, 13) are rolled from a reel (2, 11) which is held by a movable support means (3, 10, 16) which is being moved in a desired direction along the mould, whereby said support means (2, 10, 16) comprises at least one roller (6, 12, 17) being connected to said movable support means (3, 10, 16) by at least one articulated joint (7, 19) such that said roller (6, 12, 17) holds down laid out rovings (9, 13).

## Description

The present invention relates to a method for laying a fibre material on a mould surface, in which rovings of the fibre material are laid on the mould surface or on a fibre material already laid on the mould surface, whereby the rovings are rolled from a reel which is held by a movable support means which is being moved in a desired direction along the mould.

A method of producing a fibre reinforced structure is known from US 4 242 160 A, which discloses a method of producing a wind turbine rotor blade, whereby a filament-reinforced composite mandrel is used. The filaments are wound on the mandrel to form a spar of the wind turbine rotor blade.

EP 2 511 078 A1 discloses a method of producing fibre reinforced structure in which fibre material is laid on a mould surface resembling a negative image of the fibre reinforced structure to be produced and in which a resin is infused and cured after the fibre material is laid on the mould surface. Layering the fibre material on the mould surface comprises a step of laying rovings of the fibre material on the mould surface or on a fibre material already laid on the mould surface and applying an underpressure to a space between the rovings and the mould surface. This method can be used to produce a fibre reinforced wind turbine rotor blade. As a means for assisting in laying fibre material on a surface of a mould a reel is used that is held by a support with a base comprising wheels or rollers. The fibre material to be laid on the mould surface is wound on the reel in form of rovings. During laying the rovings on the mould surface the rovings, the reel and the mould surface not yet covered by rovings are covered by an air tight cover, e.g. a transparent PVC type film. This film holds the rovings in place, subsequently air is sucked out of the space between the mould surface and the air tight film.

However, it can be difficult to move and handle the movable support when it is completely covered by said air tight film.

It is therefore an object of the present invention to provide an easier method for laying a fibre material on a mould surface.

According to the present invention this object is achieved in the above defined method in that said support means comprises at least one roller being connected to said movable support means by at least one articulated joint such that said roller holds down laid out rovings.

The present invention is based on the idea that it is not necessary to use a thin air tight film covering the movable support means and the rovings when the rovings are rolled from said reel.

According to the invention the movable support means comprises at least one roller which is connected to the movable support means by at least one articulated joint such that said roller holds down laid out rovings. When the movable support is moved along the mould said roller is pulled after said movable support means such that the rovings which are positioned in the mould are held in place by the gravitational force of the roller. As the rovings are hold down by said roller a tensioning force is generated in longitudinal direction of the rovings which ensures that rovings are unrolled from said reel. Accordingly the rovings are unrolled from the reel when the support means is moved.

In the inventive method preferably a movable support means with wheels is used.

According to a further development of the invention it may be envisaged that a movable support means with multiple reels for rovings is used. Accordingly multiple rovings can be applied on the mould surface simultaneously.

In this regard it is preferred in the inventive method that a movable support means with multiple reels for rovings is used being arranged in at least two staggered rows. Preferably the two or more staggered rows are staggered or offset so that the available space can be utilised very efficiently.

Further the invention relates to a movable support means for at least one reel for rovings.

According to the invention said movable support means is characterised in that it comprises at least one roller for holding down laid out rovings. The roller may comprise a non-static material.

Preferably said movable support means comprises multiple reels for rovings. Said multiple reels for rovings may be arranged in at least two staggered rows.

In the inventive movable support means it is preferred that said multiple reels are interconnected by movable joints.

Further it is preferred that said rollers are made at least partially from a non-static material, namely a material which is not prone to static electric charge due to the movement of the roller.

The invention and its underlying principle will be better understood when consideration is given to the following detailed description of preferred embodiments.

In the accompanying drawings:
- fig. 1: shown an inventive movable support means to be used in the inventive method;
- fig. 2: is a top view of an embodiment of the inventive movable support means; and
- fig. 3: is a top view of a further embodiment of the movable support means.

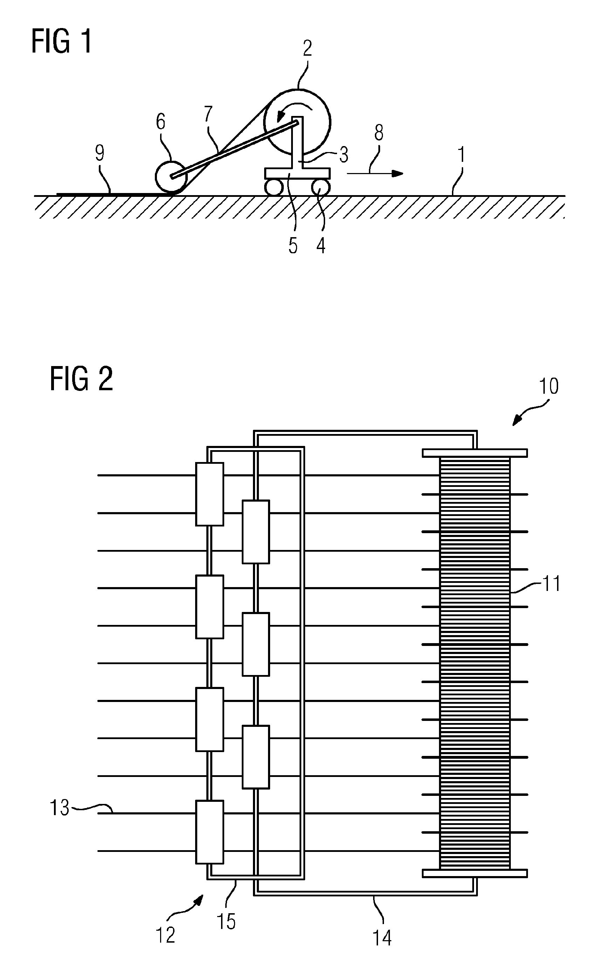

Fig. 1 schematically shows the procedure of laying a fibre material on a surface of a mould 1. Said fibre material can be a glass fibre material, a carbon fibre material or any other fibre material which is suitable for being used for the production of wind rotor blades.

As a means for assisting in laying fibre material on the surface 1 of the mould a reel 2 is used that is held by a movable support means 3 comprising wheels or rollers 4. Said movable support means 3 comprises a base 5 to which said wheels or rollers 4 are attached to. The fibre material to be laid on the surface of the mould 1 is wound on the reel 2 in form of rovings.

The mould 1 represents a negative form or shape of a rotor blade half shell. The mould is used for producing the fibre reinforced structure by means of vacuum assisted resin transfer moulding (VARTM).

When producing the fibre reinforced structure said fibre material in form of rovings is laid in the surface of the mould 1 in form of dry rovings which are unreeled from the reel 2 while the support means 3 is moved over the surface of mould 1.

The movable support means 3 comprises a roller 6 being connected to said movable support means 3 by an articulated joint 7. When the support means 3 is moved along a direction which is indicated by an arrow 8 in fig. 1 said roller 6 is pulled after, so that laid out rovings 9 are held in place. The function of the roller 6 is thus to hold laid out rovings 9 in place by applying a vertical gravitational force to the laid up part of the rovings 9. Simultaneously a tension force is generated acting on the non-laid out part of the rovings 9 in longitudinal direction of the rovings. When the support means 3 is moved in horizontal direction, as is indicated by arrow 8, the laid out rovings 9 are held down by said roller 6, due to the tensioning force the movable reel 2 is rotated, so that further rovings 9 are unreeled and laid on the mould surface or on a fibre material already laid on the mould surface.

When rovings 9 are laid out in the mould 1 on their desired position they do not change position even though the reel 2 may try to pull the rovings 9 by the tension force which acts on the part of the rovings not yet laid out.

As the rovings 9 are held in position by the gravitational force the rovings not yet laid out can be pulled off the reel 2 due to the tension force. The roll-off of rovings from the reel 2 is therefore only effected by moving said support means 3 and does not require any complicated motor mechanism to turn the reel at a correct speed.

As the rovings 9 follow the position and the track of the reel 2 this enables a simple curved lay-up of the rovings. This in turn again does not require any complicated motor mechanism or control to un-roll the separate rovings from the reel 2 at a correct speed. This also in turn implies that rovings of different length can be laid out by the movable support means 3.

A high quality of the roving layout is ensured as during layout a constant tension in longitudinal direction of the rovings is applied. This ensures that no wrinkles occur.

The support means 3 may be moved several times along the mould surface 1 so that multiple layers of rovings are laid out which form a fibre reinforced laminate after resin is injected into the rovings. The several layers of rovings can be laid in different angles with respect to the mould.

Fig. 2 is a top view showing another embodiment of a movable support means 10 comprising multiple reels for rovings. In Fig. 2 one can see that several reels 11 are provided which are arranged next to each other. From each reel 11 one roving can be unreeled so that several rovings can be laid out in place simultaneously.

The movable support means 10 comprises several rollers 12 for holding down laid out rovings. As can be seen in fig. 2 said rollers 12 are arranged in two staggered rows. A first row of rollers 12 is held by a joint 14, a second row of rollers 12 is held by a joint 15. Due to the staggered arrangement of rollers 12 into rows a large number of rollers 12 can be used, from each roller 12 one single roving 13 is unreeled and placed in the mould 1.

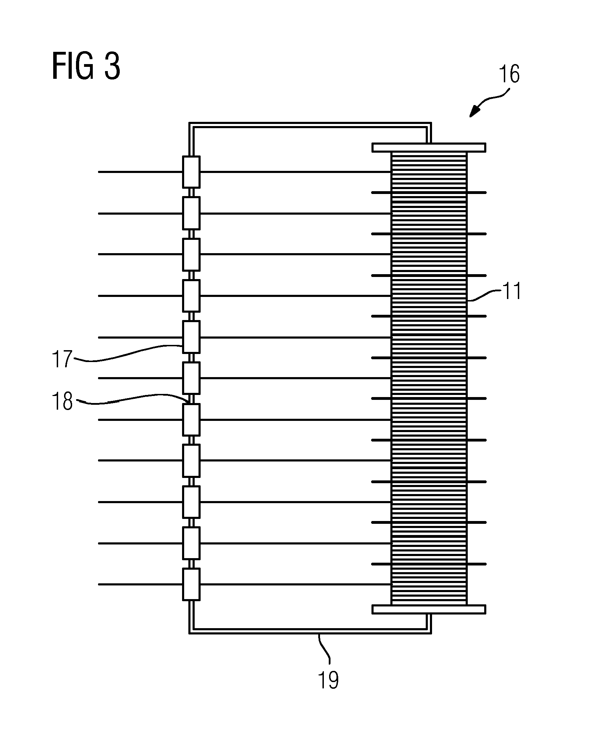

Fig. 3 shows another embodiment of a support means 16 comprising reels 11 which are arranged next to each other as in the embodiment of fig. 2. Further a number of rollers 17 is provided, whereby said rollers 17 are arranged next to each other, whereby adjacent rollers 17 are interconnected by a movable joint 18. The row of rollers 17 is connected to the reel 11 by an articulated joint 19. In the embodiments of fig. 1, 2 and 3 the rollers 6, 12, 17 are made from a non-static electric material, so that rovings cannot adhere to the rollers once they are laid out.

Although the present invention has been described in detail with reference to the preferred embodiment, the present invention is not limited by the disclosed examples from which the skilled person is able to derive other variations without departing from the scope of the invention.

## Claims

1. A method for laying a fibre material on a mould (1) surface, in which rovings (9, 13) of the fibre material are laid on the mould (1) surface or on a fibre material already laid on the mould (1) surface, whereby the rovings (9, 13) are rolled from a reel (2, 11) which is held by a movable support means (3, 10, 16) which is being moved in a desired direction along the mould, **characterized in that** said support means (2, 10, 16) comprises at least one roller (6, 12, 17) being connected to said movable support means (3, 10, 16) by at least one articulated joint (7, 19) such that said roller (6, 12, 17) holds down laid out rovings (9, 13).

2. A method according to claim 1, **characterized in that** the rovings (9, 13) are unrolled from the reel (2, 11) when the support means (3, 10, 16) is moved.

3. A method according to claim 1 or 2, **characterized in that** a movable support means (3, 10, 16) with wheels (4) is used.

4. A method according to any of the preceding claims, **characterized in that** a movable support means (3, 10, 16) with multiple reels (2, 11) for rovings (9, 13) is used.

5. A method according to any of the preceding claims, **characterized in that** a movable support means (3, 10, 16) with multiple reels (2, 11) for rovings (9, 13) is used being arranged in at least two staggered rows.

6. A movable support means (3, 10, 16) for at least one reel (2, 11) for rovings (9, 13), **characterised in that** it comprises at least one roller (6, 12, 17) for holding down laid out rovings (9, 13).

7. A movable support means according to claim 6, **characterised in that** it comprises multiple reels (2, 11) for rovings (9, 13).

8. A movable support means according to claim 6 or 7, **characterized in that** it comprises multiple reels (2, 11) for rovings (9, 13) being arranged in at least two staggered rows.

9. A movable support means according to claim 7 or 8, **characterized in that** said multiple reels (2, 11) are interconnected by movable joints (18).

10. A movable support means according to any of claims 6 to 9, **characterized in that** said rollers (6, 12, 17) are made at least partially from a non-static electric material.
